# EUROPÄISCHE PATENTANMELDUNG

(11) **EP 0 590 245 A1**
(43) Veröffentlichungstag der Anmeldung: **06.04.1994**
(21) Anmeldenummer: 93110571.2
(22) Anmeldetag: 02.07.1993
(51) Int. Cl.: B29C 67/24, B29B 7/82

(54) **Verfahren und Vorrichtung zur Herstellung eines Formteils**

(30) Priorität: 01.10.1992 DE 4232941
(71) Anmelder: Firma Carl Freudenberg, D-69469 Weinheim (DE)
(72) Erfinder: Hempel, Jürgen, Dr., D-6940 Weinheim (DE); Salama, Karim, D-6940 Weinheim (DE); Sturm, Volker, Dr., D-6101 Rossdorf (DE); Dabisch, Thomas, Dr., D-6942 Mörlenbach 4 (DE)

(57) **Zusammenfassung**

Beansprucht werden ein Verfahren und eine Vorrichtung zur Herstellung eines Formteiles aus einem porenfreien, elastomeren Polyurethan. Dabei werden die Edukte bis einschließlich zum Mischkopf jeweils isotherm gefördert. Die Vermischung erfolgt bei wenigstens 150 bar in einem Hochdruckmischkopf.

## Beschreibung

Formteile aus porenfreiem, elastomerem Polyurethan werden im Gießverfahren hergestellt. Dazu wird zunächst ein Prepolymer oder ein Addukt hergestellt, welches bereits eine Reaktion zwischen Diisocyanat und Polyol eingegangen ist. Dieses Prepolymer oder Addukt wird mit Hilfe von exakt dosierenden Zahnradpumpen dem Mischkopf zugeführt. Vernetzer oder Kettenverlängerer und gegebenenfalls Katalysatoren werden ebenfalls über dosierende Zahnradpumpen zum Mischkopf gefördert. Das Mischungsverhältnis zwischen Prepolymer bzw. Addukt und Vernetzern bzw. Kettenverlängerern beträgt dabei 100:1 bis 100:10.

Der Mischdruck in den Leitungen geht nicht über den Förderdruck der Zahnradpumpen hinaus und liegt deshalb erheblich unter 20 bar. Zur Vermischung wird infolgedessen eine mechanische Unterstützung in Form von Stachel- oder Schneckenrührern benötigt.

Diese Mischköpfe fördern kontinuierlich in offene Formwerkzeuge, welche unter dem Mischkopf vorbeigeführt werden.

Als Diisocyanate kommen zum Einsatz insbesondere Toluylendiisocyanat, 1,5-Naphthylendiisocyanat oder 4,4'-diphenylmethandiisocyanat.

Herkömmliche Polyole sind z.B. Polycaprolactondiol, Polyesterdiol oder Polyetherdiol mit einem jeweiligen Molekulargewicht von 1000 bis 5000 oder Polycarbonatdiol mit einem Molekulargewicht von 600 bis 2000.

Die nach dem beschriebenen Verfahren in der erwähnten Vorrichtung hergestellten Formteile benötigen in beheizten Werkzeugen eine Ausheizzeit zwischen 10 und 40 Minuten. Danach schließt sich gewöhnlich noch ein Tempervorgang von einem oder mehreren Tagen an.

Beschrieben wird dieser Stand der Technik in Oertel, Polyurethane Handbook, Carl-Hanser-Verlag, München (1985), Seite 378, Beispiel 2. Das Verfahren besitzt folgende Nachteile:
Wegen des geringen erzeugbaren Druckes der Förderpumpen ist die Gießzeit sehr langsam und erfolgt in ein offenes Werkzeug, was Einschränkungen in der geometrischen Gestaltung des Formteils mit sich bringt.

Die Reaktionszeiten zwischen 10 und 40 Minuten bei etwa 130°C und das nachfolgende Tempern, welches je nach Wanddicke des Formteils mehrere Tage dauern kann, verzögern und verteuern den Prozeß zusätzlich.

Aufgabe der vorliegenden Erfindung ist es, bei der Herstellung von Formteilen aus porenfreiem, elastomerem Polyurethan unter Ausnutzung an sich bekannter Vorrichtungen und Verfahren diese Nachteile weitgehend zu beseitigen oder einzuschränken. Dabei sollen insbesondere die Gießzeit und die Reaktion der Edukte bis zum vollständigen Aushärten des Formteils beschränkt werden.

Die Lösung dieser Aufgabe besteht in einem Verfahren gemäß dem kennzeichnenden Teil des ersten Patentanspruchs sowie in einer Vorrichtung zur Durchführung dieses Verfahrens gemäß Anspruch 2. Dabei werden aus zumindest zwei temperierten Vorratsbehältern für die zu verarbeitenden Edukte, die Diisocyanat- und die Polyolkomponente, über Ringleitungen und Pumpen zwei Komponentenströme erzeugt, welche getrennt voneinander in einem jeweiligen Kreislauf, einschließlich der Vorratsbehälter, jeweils isotherm über ihrer Schmelztemperatur, jedoch unter ihrer Zersetzungstemperatur, gehalten werden. Dabei wird jeweils eine solche Temperatur gewählt, daß die Viskosität des Komponentenstromes unterhalb von 900 Pa s, gemessen nach DIN 51562, liegt.

Die Komponentenströme laufen in einem Hochdruckmischkopf zusammen, welcher in die isotherme Temperaturführung des Diisocyanats einbezogen ist.

Mischkopf, Pumpen und Ringleitungen werden so ausgelegt, daß sie für eine Vermischung der Edukte unter einem Druck von wenigstens 150 bar geeignet sind.

Erst ab der Phase des Ausstoßens aus dem Hochdruckmischkopf in das Werkzeug sind die miteinander vermischten und durch chemische Reaktion verbundenen Komponenten der jeweiligen isothermen Reaktionsführung und dem Hochdruck nicht mehr ausgesetzt.

Die Verwendung eines Hochdruckmischkopfes ist an sich bekannt, jedoch bei einem Verfahren dieser Art bisher nicht praktiziert worden, weil eine isotherme Temperaturführung der hier beanspruchten Art nicht gewährleistet war und daher stets Teile der Ausgangsstoffe, insbesondere der bei Raumtemperatur in festem Zustand vorliegenden Diisocyanatkomponenten, an irgendeinem Punkt der Leitungen mit fest gewordenem, abgekühltem Material in Verbindung kam, was die Leitungen sofort verstopfte.

Das notwendige Mischungsverhältnis konnte daher nicht mit einer für eine reproduzierbare Reaktionsführung ausreichenden Genauigkeit eingehalten werden, weswegen nur Niederdruckvorrichtungen zum Einsatz kommen konnten. Der Betrieb einer Hochdruckanlage, wie in der vorliegenden Erfindung, war also nicht möglich.

Erst die jeweilige isotherme Eduktenführung von den Vorratsbehältern über die Kreisläufe und, im Falle des Diisocyanats, bis einschließlich hin zum Mischkopf, zusammen mit der Komponentenführung unter Druck, macht das beanspruchte Verfahren möglich.

Der Druck in den Kreisläufen bis zum Mischkopf von mindestens 150 bar führt zu einer optimalen Vermischung der Ausgangskomponenten innerhalb von wenigen Sekunden, selbst bei einem Zulauf der Massenströme von bis zu 2 l/s und fördert die chemische Reaktion zum Endprodukt in einem solchen Maße, daß in vielen Fällen, insbesondere bei Bauteilen, für Kupplungen, ein Nachtempern ohne Qualitätsverlust entfallen kann, was einen Gewinn an Produktionszeit von mehreren Tagen zur Folge haben kann. Dies ist ein weiterer, wesentlicher Vorteil der vorliegenden Erfindung.

Die Komponente B ist
4,4'-diphenylmethandiisocyanat, 901,25 g
Das System für die Komponente A, umfassend Vorratsbehälter, Pumpen und Systemkreislauf (Ringleitung), ist isotherm auf 100°C mittels eines Ölmantels beheizt. Die Komponente B, das Diisocyanat, ist analog vom Vorratsbehälter über die Pumpen und die Ringleitung bis einschließlich zum Mischkopfes auf gleiche Weise isotherm auf 55°C aufgeheizt.

Das gesamte, die Ausgangsstoffe führende, temperierte System wird über einen Einspritzzylinder einem Druck von etwa 200 bar ausgesetzt. Dieser Druck bleibt bis einschließlich zum Mischkopf gleich.

Zur Herstellung einer Prüfplatte mit variablen Wanddicken bis maximal 6 mm wird das Formnest des Formwerkzeugs gefüllt, indem man die ebenfalls entsprechend temperierten Ventile für die jeweiligen Komponenten öffnet für eine Einspritzzeit von 1,14 s. Die Komponenten vermischen sich im Hochdruckmischkopf im Gegenstrom mit hoher Geschwindigkeit und füllen direkt anschließend die Kavitäten des Werkzeugs.

Das ins Werkzeug gelangte, vermischte Material wird sodann über einen eingebauten Kolben einem Nachdruck von etwa 50 bar bei einer Werkzeugtemperatur von 70°C ausgesetzt. Dieser Vorgang dauert 10 s. Dabei wird das Formteil zusätzlich verfestigt.

Das fertige Formteil, die Prüfplatte, besitzt ein Gewicht von 114 g. Entsprechende Formteile können mit einer Zykluszeit von 15 bis 30 s produziert werden. Ein Nachtempern kann ohne Qualitätsverlust entfallen.

## Patentansprüche

1. Verfahren zur Herstellung eines Formteils aus einem porenfreien, elastomeren Polyurethan, bei dem eine bei Raumtemperatur in festem Zustand vorliegende Diisocyanat- und eine gegebenenfalls bei Raumtemperatur in festem Zustand vorliegende Polyolkomponente im flüssigen Zustand miteinander vermischt, in eine Hohlform überführt und verfestigt werden,
dadurch gekennzeichnet, daß die Diisocyanat- und die Polyolkomponente als voneinander getrennt geführte Edukte auf eine Temperatur jeweils oberhalb ihrer Schmelztemperatur bis zu einer Viskosität unterhalb 900 Pa s, gemessen nach DIN 51562, jedoch unterhalb ihrer jeweiligen Zersetzungstemperatur, erwärmt, in einem Hochdruckmischkopf unter einem Druck von wenigstens 150 bar miteinander vermischt, aus dem Mischkopf ausgestoßen und in das Werkzeug überführt werden, wobei die Temperaturführung der eingesetzten Edukte im ganzen Verfahren bis zum Mischkopf jeweils isotherm erfolgt und dieser auf die Temperatur des Diisocyanats erwärmt wird.

2. Vorrichtung zur Durchführung des Verfahrens nach Anspruch 1, umfassend zumindest zwei Vorratsbehälter für die als Edukte vorgesehenen Komponenten, welche durch Pumpen enthaltende, voneinander getrennte Ringleitungen mit einem Mischkopf verbunden sind, wobei die Ringleitungen Heizeinrichtungen zur Verflüssigung der Komponenten enthalten,
dadurch gekennzeichnet, daß alle die Komponenten berührenden Bauteile der Vorrichtung mit für die jeweilige Komponente eine isotherme Temperaturführung gewährleistenden Heizeinrichtungen versehen sind und daß der Mischkopf, die Pumpen und die Ringleitung für eine Vermischung der Komponenten unter einem Druck von wenigstens 150 bar ausgelegt sind.
